# EUROPÄISCHE PATENTSCHRIFT

(11) **EP 0 432 370 B1**
(45) Veröffentlichungstag und Bekanntmachung des Hinweises auf die Patenterteilung: **15.12.1993**
(21) Anmeldenummer: 90116602.5
(22) Anmeldetag: 30.08.1990
(51) Int. Cl.: A47J 37/12, A47J 36/10

(54) **Elektrisch betriebene Friteuse**
Electric fryer
Friteuse électrique

(30) Priorität: 14.12.1989 DE 8914698 U
(43) Veröffentlichungstag der Anmeldung: 19.06.1991
(73) Patentinhaber: Robert Krups GmbH & Co. KG, 42719 Solingen (DE)
(72) Erfinder: Classen, Bernd, D-5650 Solingen 1 (DE)
(74) Vertreter: Buse, Karl Georg, Dipl.-Phys.

(56) Entgegenhaltungen:
- EP-A- 0 057 775
- DE-A- 2 734 246
- DE-A- 3 150 455
- FR-A- 2 473 868

## Beschreibung

Die Erfindung bezieht sich auf eine elektrisch betriebene Friteuse mit einem einen Handgriff aufweisenden Gehäuse zur Unterbringung eines das zu fritierende Gut aufnehmenden Korbes und des Fritieröles, dessen obere Öffnung durch einen klappbaren Deckel verschließbar, und der seinerseits durch eine Verriegelung lösbar mit dem Gehäuse verbindbar ist. (D1: DE-A 27 34 246)

Derartige elektrisch betriebene Friteusen gibt es in mehreren Ausführungsformen. Ihnen gemeinsam ist, daß nach Betätigen der Verriegelung der Deckel in eine Öffnungslage überführt werden kann, in welcher die obere Öffnung des Gehäuses der Friteuse freigelegt wird. Auf diese Weise kann ein Beschicken des Fritierkorbes oder ein Herausnehmen des fritierten Gutes aus dem Friteusengehäuse erfolgen. Das Betätigen der Verriegelung erfolgt bei den bekannten Ausführungsformen von Hand aus, in dem durch Anfassen der Verriegelung diese bewegt, vorzugsweise verschwenkt wird, wobei Verriegelungshaken od.dgl. aus ihrer wirksamen in die unwirksame Lage überführt werden. Das nach dem Verriegeln erfolgte Verschwenken des Deckels der Friteuse hat zur Folge, daß die obere Öffnung des Gehäuses freigegeben wird. Damit können die beim Fritieren zwangsläufig entstehenden heißen Dämpfe aus der Öffnung des Gehäuses der Friteuse heraustreten. Dies geschieht vor allem im Bereich der Vorderseite des Gehäuses, weil hier zuerst ein Spalt zwischen der Deckelunterseite und der Stirnfläche des Gehäuses entsteht. Dadurch können die heißen Dämpfe aus dem Inneren des Gehäuses mit der Hand des Benutzers in Kontakt kommen. Dadurch besteht die Gefahr, daß sich der Benutzer die Finger seiner Hand verbrüht. Um hier Abhilfe zu schaffen, hat man bereits bei bekannten Ausführungsformen von Friteusen wenigstens einen Schutzhandschuh beigefügt. Eine solche Lösung ist jedoch unbefriedigend, weil einmal zum Schutz des Benutzers der Friteuse eine zusätzliche Einrichtung, nämlich ein Schutzhandschuh mitgeliefert werden muß. Zum anderen besteht aber die Gefahr, daß der Benutzer der Friteuse, sei es aus Bequemlichkeit, sei es durch Vergeßlichkeit, den Schutzhandschuh überhaupt nicht anzieht, oder aber, der Schutzhandschuh geht verloren. Es ist bei dieser Lösung somit kein sicherer Schutz für den Benutzer der Friteuse vor Heißdampfverbrennungen gegeben.

Durch die D1: DE-A 27 34 246 ist ein Gerät zum gleichzeitigen Garen eines Speisegutes auf beiden Seiten bekanntgeworden. Bei diesem elektrisch betriebenen Haushaltsgerät ist ein Gehäuse mit einem Unterbringungsraum vorhanden, dessen obere Öffnung durch einen klappbaren Deckel verschließbar ist. Bei einer Ausführungsform dieses bekannten Haushaltsgerätes sind Mittel vorgesehen, um den Deckel zeitweise zu verriegeln. Eine solche Verriegelung besteht aus einer den Deckel sperrenden und durch eine Zugfeder beaufschlagten Stange, die durch Stützen gehalten wird. Die Stützen gehören zu einem mit dem Behälter verbundenen Handgriff. Die Stange ist in entgegengesetzten Richtungen bewegbar und hat einen angelenkten Querflügel. Dieser kann in der Bewegungsrichtung der Stange verschoben werden und wirkt mit einer programmierbaren Zeitschaltuhr zusammen. Die Bewegungsbahn des diese Zeitspanne markierenden Zahnes wird durch einen Teilbereich des Querflügels gesperrt.

Bei dieser bekannten Ausführungsform eines elektrisch betriebenen Haushaltsgerätes haben der Griff und die Verriegelung keine gemeinsame Funktion. Der Griff ermöglicht es lediglich, das Gerät von der Heizquelle zu nehmen. Die Verriegelung ist am Griff angeordnet, hat aber keinerlei Funktionszusammenhang mit diesem. Vielmehr ist der Griff fest mit dem Gehäuse des Haushaltsgerätes verbunden und kann keine unterschiedlichen Lagen einnehmen, und kann auch nicht mit der Verriegelung zusammenwirken.

Die Erfindung will eine Friteuse der eingangs näher gekennzeichneten Art weiterverbessern, derart, daß mit Sicherheit Verbrennungen des Benutzers der Friteuse vermieden werden, die dadurch entstehen, daß beim öffnen des Deckels Heißdämpfe aus dem Gehäuseinneren der Friteuse entweichen und mit den Fingern oder der Hand des Benutzers in Berührung kommen. Dabei liegt der Erfindung die weitere Aufgabe zugrunde, das Aussehen der bisherigen Friteuse durch die zu treffenden Maßnahmen nicht zu beeinträchtigen und Lösungsmittel vorzuschlagen, die die Friteuse nicht oder nicht nennenswert verteuert. Dabei soll ein Zusammenwirken zwischen dem Griff und der Verriegelung erfolgen.

Zur Lösung dieser Aufgabe wird erfindungsgemäß vorgeschlagen, daß der der Verriegelung des Deckels zugeordnete Griff seitlich neben der oberen Öffnung des Gehäuses liegt und unterschiedliche Stellungen einnimmt, derart, daß in der einen Stellung des Griffes die Verriegelung des Deckels wirksam, in der anderen Stellung dagegen unwirksam ist, und daß in der unwirksamen Stellung der Verriegelung ein gemein sames Verschwenken von Griff, Verriegelung und Deckel durchführbar ist.

Bei der bevorzugten Ausführungsform der Erfindung wird ein solcher Griff als Schiebegriff ausgebildet. Dieser Schiebegriff ist in seiner unwirksamen Stellung innerhalb der Verriegelung und in seiner wirksamen Stellung seitlich neben dem Gehäuse der Friteuse angeordnet.

Die erfindungsgemäße Ausbildung einer elektrisch betriebenen Friteuse hat gegenüber dem Bekannten erhebliche Vorteile. Das Betätigen der Verriegelung der Friteuse geschieht nicht mehr unmittelbar von Hand aus. Dies bedeutet, daß das Überführen der Verriegelung in die unwirksame Stellung nicht mehr durch direktes Anfassen derselben mit der Hand des Benutzers erfolgt. Vielmehr wird zum Entriegeln der Verriegelung ein Handgriff benutzt, der darüber hinaus in seiner wirksamen Stellung seitlich neben der Öffnung des Gehäuses liegt. Durch diese Maßnahmen wird mit Sicherheit verhindert, daß die beim Öffnen des Deckels aus dem Inneren des Gehäuses austretenden Heißdämpfe mit der Hand des Benutzers der Friteuse in Wirkverbindung kommen und bei ihm Verletzungen, insbesondere Verbrennungen hervorrufen. Bei der erfindungsgemäßen Ausbildung der Friteuse haben der Griff und die Verriegelung eine gemeinsame Sicherheitsfunktion. In der unwirksamen Stellung der Verriegelung erfolgt ein gemeinsames Verschwenken von Griff, Verriegelung und Deckel. Dabei ist von Bedeutung, daß das Unwirksamwerden der Verriegelung durch eine Bewegung des Griffes durchgeführt wird.

Bei der erfindungsgemäßen Ausbildung der Friteuse ist ein direktes Anfassen der Verriegelung zum Zwecke des Überführens in die unwirksame Stellung nicht mehr erforderlich. Zum anderen befindet sich die Hand des Benutzers beim Öffnen des Deckels weit entfernt von der Öffnung des Gehäuses, aus der die Heißdämpfe austreten.

Es empfiehlt sich, den Schiebegriff in seiner unwirksamen Stellung in einem Aufnahmeraum der Verriegelung unterzubringen, der Führungs- und Lagerbereiche für diesen Schiebegriff aufweist. Diese Ausführungsform der Erfindung hat den großen Vorteil, daß der Schiebegriff in seiner unwirksamen Stellung fast ganz in dem Aufnahmeraum der Verriegelung untergebracht ist und daher für den Beschauer praktisch nicht sichtbar ist, bis auf ein kurzes Anfaßende, das aber so gestaltet werden kann, daß es sich den vorhandenen Konturen des Deckels anpaßt und daher optisch kaum in Erscheinung tritt. Auf der anderen Seite kann ein solcher Schiebegriff bei Bedarf ohne Mühe aus dem Aufnahmeraum der Verriegelung herausgezogen werden. Man hat dabei die Möglichkeit, den Schiebegriff so lang zu halten, daß er im wesentlichen die gesamte Breite der Verriegelung einnimmt. Auf diese Weise wird ein langer Schiebegriff geschaffen, was den Vorteil hat, daß die Hand des Benutzers, die mit dem Schiebegriff arbeitet, sehr weit von der Öffnung der Friteuse entfernt ist.

Es empfiehlt sich, die Führungs- und Lagerbereiche für den Schiebegriff aus im Abstand voneinander angeordneten, L-förmigen Elementen bestehen zu lassen. Dabei wirkt einer der Schenkel des L's jeweils mit Bereichen des Schiebegriffes zusammen, während der andere Schenkel als Vorsprung der Innenwand der Verriegelung unmittelbar angeformt ist.

Aus herstellungstechnischen Gründen empfiehlt es sich, den Schiebegriff als einstückigen Körper, vorzugsweise als Kunststoffkörper auszubilden. Dieser besteht aus einem etwa plattenförmigen Grundkörper, dessen seitliche Vorsprünge mit den Lager- und Führungsbereichen der Verriegelung zusammenwirken. Das vordere Ende eines solchen einstückigen Schiebegriffes ragt zur Bildung einer Handhabe seitlich aus dem Aufnahmeraum heraus. Dieser einstückige Schiebegriff kann in wohlfeiler Weise hergestellt werden. Seine Konturen und seine Abmessungen sind dabei so gestaltet, daß sie denjenigen des Aufnahmeraumes der Verrieelung entsprechen.

Zweckmäßig ist es, die eine, vorzugsweise die obere Wandung des aus der Verriegelung herausragenden Endes des Schiebegriffes mit einer Riffelung zu versehen. Diese Riffelung kann z.B. aus mehreren parallel und im Abstand voneinander angeordneten Rippen und Vertiefungen bestehen. Auf diese Weise wird eine leichtere Betätigung des Schiebegriffes erreicht. Die Riffelung wird bei der Herstellung des Schiebegriffes mit erzeugt.

Der Grundkörper des Schiebegriffes weist vorteilhaft an seinen beiden Enden quer zu ihm liegende Abschlußwände auf. Zwischen diesen verlaufen der Innenwand des Grundkörpers angeformte Rippen, die unterschiedlich hoch sein können, derart, daß die aussenliegenden Rippen kürzer gehalten sind als eine in der Mitte des Grundkörpers angeformte längere Rippe. Die Länge der Rippen richtet sich im übrigen nach den vorhandenen Abmessungen des Aufnahmeraumes für den Schiebegriff in der Verriegelung.

Nach einem weiteren Vorschlag der Erfindung ist die Verriegelung schwenkbar am Deckel der Friteuse gelagert und der Aufnahmeraum für den Schiebegriff ist seitlich neben der Schwenkachse der Verriegelung angeordnet. Die Anordnung des Aufnahmeraumes für den Schiebegriff erfolgt dabei derart, daß der Aufnahmeraum auf derjenigen Seite der Lagerstelle für die Verriegelung liegt, die dem eigentlichen Verriegelungshaken oder der Verriegelungsnase zugekehrt ist. Bei einer solchen Ausbildung genügt eine verhältnismäßig geringe Kraft, die auf den seitlich aus der Verriegelung vorstehenden Schiebegriff ausgeübt werden muß, um eine Entriegelung und damit ein Verschwenken nicht nur des Schiebegriffes sondern auch des damit zusammenarbeitenden Deckels der Friteuse herbeizuführen.

Dabei ist es zweckmäßig, wenn die einstückige Verriegelung Lagerwangen für die Schwenkachse aufweist, deren Enden ihrerseits in den benachbarten Seitenwandungen des Deckels gelagert sind. Dabei weist das vordere Ende der Verriegelung die Verriegelungsnase auf, die in ihrer wirksamen Stellung ein Widerlager des Gehäuses der Friteuse hintergreift. Beim Verschwenken der Verriegelung können in an sich bekannter Weise Federn wirksam werden, die zwischen dem Deckel und einem benachbarten Bereich der Verrieglung vorgesehen sind.

Zweckmäßig ist es, daß das der Verriegelungsnase gegenüber. liegende hintere Ende der Verriegelung in Richtung auf das Gehäuse der Friteuse abgewinkelt ist und in einen versenkten Bereich des Gehäuses hineinragt. In seiner Schließlage liegt dabei dieses hintere Ende entfernt von dem Boden des versenkten Bereiches des Deckels, so daß für das Verschwenken der Verriegelung noch genügend Platz bleibt, bis in der Endlage der Schwenkung das hintere Ende der Verriegelung auf den Boden des versenkten Bereiches stößt. Auf diese Weise kann zuleich ein Anschlag für eine begrenzte Verschwenkbewegung der Verriegelung geschaffen werden.

Auf den Zeichnungen ist ein Ausführungsbeispiel der Erfindung dargestellt und zwar zeigen:
- Fig. 1: in schaubildlicher Darstellung eine erfindungsemäß ausgebildete Friteuse bei geschlossenem Deckel und bei in seiner unwirksamen Lage befindlichen Griff,
- Fig. 2: eine Vorderansicht der Friteuse gemäß der Fig. 1 bei geschlossenem Deckel, jedoch bei herausgezogenem Griff, wobei sich dieser in seiner Bereitschaftlage befindet,
- Fig. 3: im vergrößerten Maßstab einen Schnitt entlang der Linie III-III der Fig. 2 der Zeichnung,teilweise weggebrochen,
- Fig. 4: eine der Fig. 2 entsprechende Vorderansicht der erfindungsgemäßen Friteuse, jedoch nach dem Überführen des Deckels in seine Öffnungslage und
- Fig. 5: eine Seitenansicht der Verriegelung der erfindungsgemäßen Friteuse bei eingeschobenem Schiebegriff.

Es sei zunächst erwähnt, daß in den Figuren der Zeichnungen nur diejenigen Teile einer elektrisch betriebenen Friteuse dargestellt sind, welche für das Verständnis der Erfindung Bedeutung haben. So fehlen das Anschlußkabel und der Fritierkorb, in welchen das zu fritierende Gut eingefüllt ist. Ein solcher Fritierkorb ist darüber hinaus in aller Regel mit einer Absenk- bzw. Anhebeinrichtung versehen. Auf die Darstellung all dieser Teile ist verzichtet, weil sie zum anderen eine grundsätzlich bekannte Ausbildung haben können.

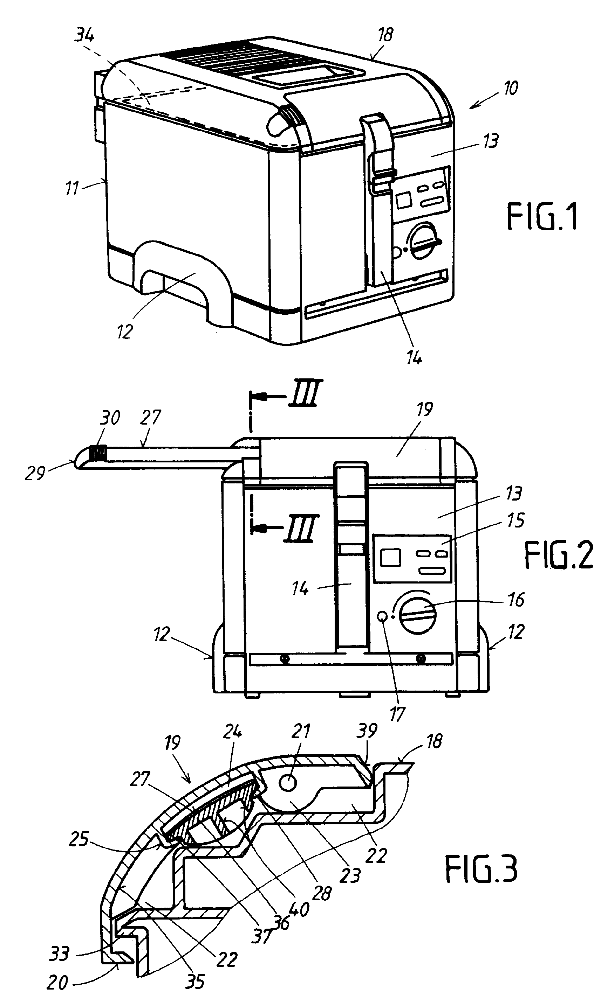

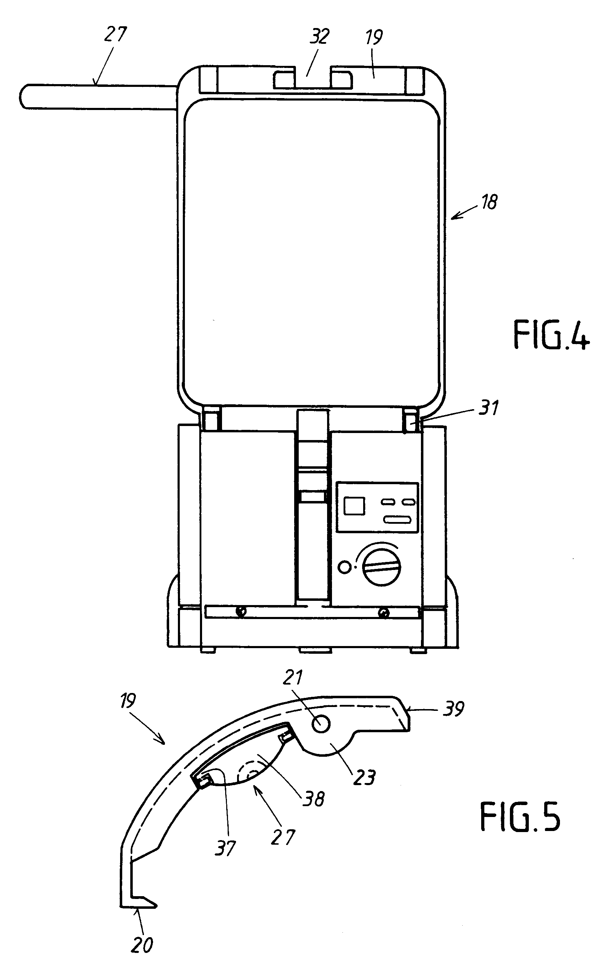

Dem Ausführungsbeispiel nach den Fig. 1 bis 5 der Zeichnung ist eine generell mit 10 bezeichnete elektrisch betriebene Friteuse zugrundegelegt. Diese hat ein im Querschnitt etwa rechteckig gehaltenes Gehäuse 11, welches z.B. aus einem schlecht wärmeleitenden Kunststoff hergestellt sein kann. An zwei gegenüberliegenden Seitenwandungen hat das Gehäuse 11 Traggriffe 12, die den Seitenwandungen unmittelbar angeformt sind. Diese Handgriffe erleichtern den Transport der Friteuse 10. Im Inneren des großvolumigen Gehäuses 11 ist der nicht dargestellte Fritierkorb untergebracht. Dieser Raum dient auch als Unterbringungsraum für das Fritieröl. Beispielsweise hat der Innenraum ein Fassungsvermögen von 2,5 Liter Öl. Die obere Öffnung des Gehäuses 11 der Friteuse 10 ist mit 34 bezeichnet. Sie ist in der Fig. 1 durch einen generell mit 18 bezeichneten Deckel verschlossen. Dieser Deckel ist an seiner Rückseite über Scharniere 31 bekannter Bauart mit der Rückwand des Gehäuses 11 verbunden. Daher kann der Deckel 18 aus seiner in der Fig. 1 dargestellten Schließlage in seine Öffnungsstellung gemäß der Fig. 4 überführt werden.

Auf der mit 13 bezeichneten Vorderseite des Gehäuses ist in der Mitte liegend ein Betätiger 14 angebracht. Mit diesem kann in bekannter Weise der im Inneren des Gehäuses befindliche, nicht sichtbare Fritierkorb gehoben oder danach wieder abgesenkt werden. Da eine solche Hebe- bzw. Senkvorrichtung für Fritierkörbe grundsätzlich bekannt ist, ist auf eine zeichnerische Darstellung verzichtet worden.

Wie aus der Fig. 2 der Zeichnung ersichtlich, befinden sich rechts neben dem Betätiger 14 für den Fritierkorb mehrere Anzeige-und Betätigungseinrichtungen der Friteuse 10. Zu diesen gehört zunächst ein Anzeige- und Betätigungsfeld 15. Auf diesem Anzeigefeld befindet sich zunächst ein Ein- und Ausschalter. Dieser kann sowohl als Berührungsschalter als auch als mechanischer Schalter ausgebildet sein. Ferner ist auf diesem Betätigungs- und Anzeigefeld eine Einrichtung zum Einstellen der Zeit vorhanden. Diese kann als Sensorschalter ausgebildet sein. In einem großen Feld erscheint dann die eingestellte Zeit.

Unter dem Anzeige- und Betätigungsfeld 15 ist im gewählten Ausführungsbeispiel ein Temperaturwähler 16 angeordnet, der als Drehknopf ausgebildet ist und der eine stufenlose Temperaturwahl bis etwa 190° C zuläßt. Neben dem Temperaturwähler ist im Ausführungsbeispiel eine Kontrolleuchte 17 angeordnet. Diese leuchtet dann auf, wenn die Friteuse in Betrieb genommen ist.

Dem Deckel 18 der Friteuse 10 ist eine generell mit 19 bezeichnete Verriegelung zugeordnet, deren Ausbildung am besten aus den Fig. 3 und 5 der Zeichnung ersichtlich ist. Daraus ergibt sich, daß es sich bei der Verriegelung um einen einstückigen Körper, vorzugsweise einen Kunststoffkörper handelt, der schwenkbar an dem Deckel 18 gelagert ist. Zu diesem Zweck hat die Verriegelung zwei in Abstand voneinander angeordnete Lagerwangen 23, die jeweils einen glatten, nicht näher bezeichneten Durchbruch aufweisen, der von einer Schwenkachse 21 durchsetzt ist. Die Enden dieser Schwenkachse 21 lagern in den benachbarten Seitenwandungen des Deckels. Um diese Schwenkachse 21 ist die Verriegelung schwenkbar und zwar, um sie aus der in der Fig. 3 dargestellten Verriegelungslage in eine Öffnungslage zu überführen, die ein Öffnen des Deckels 18 gegenüber dem Gehäuse 11 der Friteuse zuläßt. In der Verriegelungslage hintergreift eine Verriegelungsnase 20 ein Widerlager 33 des Gehäuses 11 der Friteuse 10. Das der Verriegelungsnase 20 gegenüberliegende andere Ende der Verriegelung ist in Richtung auf das Gehäuse abgewinkelt. Diese Abwinkelung ist das hintere Ende 39, welches in einen versenkten Bereich 22 des Deckels 18 eingreift. Dabei liegt das hintere Ende 39 entfernt von dem Boden des versenkten Bereiches 22, damit ein genügend großer Weg für das Verschwenken der Verriegelung freibleibt.

Aus der Fig. 3 der Zeichnung ist ferner zu erkennen, daß der Innenwand 35 der Verriegelung 19 zwei in Abstand voneinander liegende Vorsprünge 25 angeformt sind, deren vordere Enden jeweils so abgewinkelt sind, daß sie aufeinander zuzeigen. Auf diese Weise entstehen zwei im Querschnitt gesehen L-förmige Körper. Der eine Schenkel jedes L's ist dabei der der Innenwand 35 der Verriegelung angeformte Vorsprung, während der quer dazu andere Schenkel einen Führungs- und Lagerbereich 28 bildet. Dieser Führungs- und Lagerungsbereich wirkt mit einem generell mit 27 bezeichneten Griff zusammen, der im Ausführungsbeispiel als Schiebegriff ausgebildet ist.

Dieser Schiebegriff 27 ist in der Fig. 1 in seiner unwirksamen, also Ruhelage wiedergegeben. In dieser liegt er in einem Aufnahmeraum 24 der Verriegelung 19. Nur sein vorderes Ende 29 ragt aus der Verriegelung hervor. Dieses vordere Ende 29 ist so gestaltet, daß es den benachbarten Teilen des Deckels angepaßt ist.

Der Schiebegriff 27 kann durch Herausziehen aus den Aufnahmeraum in seine wirksame, in der Fig. 2 dargestellte Lage überführt werden. Dies geschieht einfach dadurch, daß man das vordere Ende 29 des Schiebegriffes 27 erfaßt und es in Richtung des Aufnahmeraumes nach außen zieht. Um dabei das Herausziehen aus dem Aufnahmeraum 24 zu erleichtern, ist die Oberseite der Wandung nahe dem vorderen Ende 29 mit einer Riffelung 30 versehen. Diese kann aus parallel und in Abstand voneinander angeordneten Rippen und Vertiefungen bestehen.

Im übrigen ist der Schiebegriff 27 ein einstückiger, vorzugsweise aus Kunststoff gefertigter Körper, der an seinen beiden Enden durch jeweils eine Abschlußwand 38 verschlossen ist und einen Grundkörper 36 aufweist, der etwa plattenförmig und leicht gekrümmt gestaltet ist. Dieser Grundkörper 36 hat nach beiden Seiten vorstehende seitliche Vorsprünge 37, deren Innenseite mit dem Führungs- und Lagerbereich 28 zusammenwirkt, so wie dies in der Fig. 3 der Zeichnung dargestellt ist. Beim Herausziehen des Schiebegriffes 27 aus seiner unwirksamen in die wirksame Stellung bzw. umgekehrt erfolgt somit eine beidseitige Führung an den Führungs- und Lagerbereichen der L-förmigen Vorsprünge 25.

Der Grundkörper 36 des Schiebegriffes 27 hat auf seiner dem Deckel 18 zugekehrten Seite mehrere,parallel und in Abstand voneinander angeordnete Rippen, von denen zwei in unmittelbarer Nähe der seitlichen Vorsprünge 37 liegen. Diese beiden äußeren Rippen 40 sind verhältnismäßig kurz gehalten. Länger bemessen ist dagegen eine weitere, ebenfalls mit 40 bezeichnete Rippe, die in der Mitte des Grundkörpers 36 liegend diesem angeformt ist.

Die Arbeitsweise der erfindungsgemäßen elektrisch betriebenen Friteuse ist die folgende:

In der Fig. 1 ist die Arbeitslage der Friteuse 10 wiedergegeben. Es ist dabei unterstellt, daß der im Innenraum des Gehäuses 11 befindliche Fritierkorb mit einem zu fritierenden Gut beschickt ist und daß der Benutzer eine Einstellung an den dafür vorgesehenen Elementen des Betätigungsfeldes 15 und des Temperaturwählers 16 durchgeführt hat. Sobald die eingestellte Fritierzeit abgelaufen ist, wird dies in bekannter Weise entweder durch ein optisches oder akustisches Signal angezeigt. Durch diese Anzeige wird der Benutzer informiert, daß der Fritiervorgang beendet ist und daß er das Fritiergut aus dem Gehäuse 11 entnehmen kann. Um dies ohne die Gefahr einer Verbrennung durch heiße Dämpfe tun zu können, erfaßt er die Riffelung 30 im Bereich des vorderen Endes 29 des Schiebegriffes 27 und zieht diesen aus seiner in der Fig. 1 dargestellten Ruhelage in die in der Fig. 2 wiedergegebene wirksame Stellung. Um dabei ein vollständiges Herausziehen des Schiebegriffes 27 aus der Verriegelung 19 zu vermeiden, ist ein nicht näher bezeichneter Anschlag vorgesehen. Sodann erfaßt der Benutzer den Schiebegriff 27, der weit außerhalb der Öffnung 34 des Gehäuses 11 liegt und bewegt ihn nach oben. Dabei erfolgt ein Verschwenken der Verriegelung 19 um die Schwenkachse 21 mit dem Erfolg, daß die Verriegelungsnase 20 von dem Widerlager 33 entfernt wird. Ist das Widerlager 33 von der Verriegelungsnase 20 überlaufen, dann kann die Verriegelung 19 zusammen mit dem Deckel nach oben geklappt werden. Der Deckel 18 und die ihm zugeordnete Verriegelung 19 nehmen dann die in der Fig. 4 wiedergegebene Stellung ein. In dieser ist die Öffnung 34 völlig freigelegt, so daß unter Benutzung des Betätigers 14 in bekannter Weise der Fritierkorb zunächst angehoben und dann das Fritiergut aus ihm entfernt werden kann.

Es sei noch erwähnt, daß das Verschwenken der Verriegelung 19 in grundsätzlich bekannter Weise unter Einwirkung auf Federn erfolgt, die beispielsweise in dem versenkten Bereich 22 des Deckels angeordnet sein können. Auf die zeichnerische Darstellung dieser Federn ist verzichtet worden.

Sobald das fertig zubereitete Fritiergut dem Gehäuse 10 entnommen ist, kann der Schiebegriff 27 wieder in seine Ruhelage überführt werden, in der er innerhalb des Aufnahmeraumes 24 der Verriegelung 19 liegt. Nach dem Verschließen des Deckels 18 zeigt die Friteuse 10 dann wieder das in der Fig. 1 dargestellte Aussehen.

Wie bereits erwähnt, ist die dargestellte ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Gestalt und Ausbildung des Schiebegriffes 27 und der mit ihm zusammenwirkenden Teile, insbesondere des Führungs- und Lagerbereiches 28. Darüber hinaus kann die Erfindung auch bei anderen an sich bekannten Friteusen eingesetzt werden.

## Patentansprüche

1. Elektrisch betriebene Friteuse (10) mit einem einen Griff (27) aufweisenden Gehäuse (11) zur Unterbringung eines das zu fritierende Gut aufnehmenden Korbes und des Fritieröls, dessen obere Öffnung durch einen klappbaren Deckel verschließbar, und der seinerseits durch eine Verriegelung lösbar mit dem Gehäuse verbindbar ist,
**dadurch gekennzeichnet**,
daß der der Verriegelung (19) des Deckels (18) zugeordnete Griff (27) seitlich neben der oberen Öffnung (34) des Gehäuses (11) liegt und unterschiedliche Stellungen einnimmt, derart, daß in der einen Stellung des Griffes (27) die Verriegelung (19) des Deckels (18) wirksam, in der anderen Stellung dagegen unwirksam ist, und daß in der unwirksamen Lage der Verriegelung (19) ein gemeinsames Verschwenken von Griff (27), Verriegelung (19) und Deckel (18) durchführbar ist.

2. Friteuse nach Anspruch 1, dadurch gekennzeichnet, daß der Griff als Schiebegriff (27) ausgebildet ist, derart, daß er in seiner unwirksamen Stellung innerhalb der Verriegelung (19) und in seiner wirksamen Stellung seitlich neben dem Gehäuse (11) der Friteuse (10) angeordnet ist.

3. Friteuse nach Anspruch 1 und 2, dadurch gekennzeichnet, daß der Schiebegriff (27) in seiner unwirksamen Stellung in einem Aufnahmeraum (24) der Verriegelung (19) untergebracht ist, der Führungs- und Lagebereiche (28) für den Schiebegriff (27) aufweist.

4. Friteuse nach Anspruch 3, dadurch gekennzeichnet, daß die Führungs- und Lagebereiche für den Schiebegriff (24) aus im Abstand voneinander angeordneten L-förmigen Elementen bestehen, deren einer Schenkel (28) jeweils mit Bereichen des Schiebegriffes (27) zusammenwirkt, und deren anderer Schenkel als Vorsprung (25) der Innenwand (35) der Verriegelung (19) angeformt ist.

5. Friteuse nach einem oder mehreren der vorangehenden Ansprüche, dadurch gekennzeichnet, daß der Schiebegriff (27) ein einstückiger Körper ist, der aus einem etwa plattenförmigen Grundkörper (36) besteht, dessen seitliche Vorsprünge (37) mit den Lager- und Führungsbereichen (28) der Verriegelung (19) zusammenwirken, und dessen vorderes Ende (29) zur Bildung einer Handhabe seitlich aus dem Aufnahmeraum (24) herausragt.

6. Friteuse nach Anspruch 5, dadurch gekennzeichnet, daß eine - vorzugsweise die obere - Wandung des aus der Verriegelung (19) herausragenden Endes (29) des Schiebegriffes (27) mit einer Riffelung (30) versehen ist.

7. Friteuse nach einem oder mehreren der vorangehenden Ansprüche, dadurch gekennzeichnet, daß der Grundkörper (36) des Schiebegriffes (27) an seinen beiden Enden quer zu ihm liegende Abschlußwände (38) aufweist, zwischen denen der Innenwand des Grundkörpers (36) angeformte Rippen (40) verlaufen.

8. Friteuse nach Anspruch 1, dadurch gekennzeichnet, daß die Verriegelung (19) schwenkbar am Deckel (18) gelagert ist, und daß der Aufnahmeraum (24) für den Schiebegriff (27) seitlich neben der Schwenkachse (21) angeordnet ist.

9. Friteuse nach Anspruch 1 und 8, dadurch gekennzeichnet, daß die einstückige Verriegelung (19) Lagerwangen (23) für die Schwenkachse (28) aufweist, deren Enden in den benachbarten Seitenwandungen des Deckels (18) gelagert sind, und daß das vordere Ende der Verriegelung (19) eine Verriegelungsnase (20) aufweist, die in ihrer wirksamen Stellung ein Widerlager (30) des Gehäuses (11) der Friteuse (10) hintergreift.

10. Friteuse nach Anspruch 9, dadurch gekennzeichnet, daß das der Verriegelungsnase (20) gegenüberliegende hintere Ende (39) der Verriegelung (19) in Richtung auf das Gehäuse (11) der Friteuse (10) abgewinkelt ist und in einen versenkten Bereich (22) des Deckels (18) hineinragt.

## Claims

1. An electric fryer (10) which has a housing (11) with a handle (27) for accommodating a basket holding the product to be deep-fried and the frying oil, whereby the top opening of said housing can be closed with a folding lid, which in turn is detachably connected by a closure to the housing,
characterised in that
the handle (27) belonging to the closure (19) of the lid (18) is situated at the side beside the top opening (34) of the housing (11) and adopts different positions in such a way that in one position of the handle (27) the closure (19) of the lid (18) is operative and, by contrast, in the other position is inoperative, and that in the inoperative position of the closure (19) the handle (27), closure (19) and lid (18) can be swivelled away together.

2. A fryer according to claim 1, characterised in that the handle is designed as a sliding handle (27) so that in its inoperative position it is located inside the closure (19) and in its operative position it is located at the side beside the housing (11) of the fryer (10).

3. A fryer according to claims 1 and 2, characterised in that the sliding handle (27), in its inoperative position, is accommodated in a chamber (24) of the closure (19), said chamber having guiding and bearing sections (28) for the sliding handle (27).

4. A fryer according to claim 3, characterised in that the guiding and bearing sections for the sliding handle (24) consist of L-shaped elements arranged at a distance from each other, one leg (28) of each said element interacting with sections of the sliding handle (27) and the other leg being fashioned as a projection (25) of the inside wall (35) of the closure (19).

5. A fryer according to one or more of the preceding claims, characterised in that the sliding handle (27) is a single-piece element consisting of a roughly plate-shaped body whose side projections (37) interact with the bearing and guiding sections (28) of the closure (19) and whose front end (29) protrudes from the chamber (24) at the side to form a handle.

6. A fryer according to claim 5, characterised in that one wall - preferably the top one - of the end (29) of the sliding handle (27) protruding from the closure (19) is provided with ribbing (30).

7. A fryer according to one or more of the preceding claims, characterised in that at its two ends the body (36) of the sliding handle (27) has end walls (38) lying at right angles to the handle, ribs (40) fashioned on the inside wall of the body (36) running between said end walls.

8. A fryer according to claim 1, characterised in that the closure (19) is pivot-mounted on the lid (18) and that the chamber (24) for the sliding handle (27) is arranged at the side beside the pivot axle (21).

9. A fryer according to claims 1 and 8, characterised in that the single-piece closure (19) has bearing cheeks (23) for the pivot axle (28), the ends of said cheeks being mounted in the adjacent side walls of the lid (18), and that the front end of the closure (19) has a locking lug (20) which in its operative position grips behind an abutment (33) of the housing (11) of the fryer (10).

10. A fryer according to claim 9, characterised in that the rear end (39) of the closure (19) opposite the locking lug (20) is angled in the direction of the housing (11) of the fryer (10) and protrudes into a sunken section (22) of the lid (18).

## Revendications

1. Friteuse électrique (10) comportant un boîtier (11) équipé d'une poignée (27) et destiné à contenir un panier de réception de l'aliment à frire et de l'huile de friture, et dont l'ouverture supérieure peut être fermée par un couvercle articulé qui de son côté peut être attaché au boîtier par un verrou amovible,
**caractérisée en ce que** la poignée (27) associée au verrouillage (19) du couvercle (18) est agencée latéralement près de l'ouverture supérieure (34) du boîtier (11) et occupe différentes positions de sorte que dans une position de la poignée (27) le verrouillage (19) du couvercle (18) est opérant et, par contre, il est inopérant dans une autre position, et en ce que dans la position inopérante du verrouillage (19) un pivotement d'ensemble de la poignée (27), du verrouillage (19) et du couvercle (18) est réalisable.

2. Friteuse selon la revendication 1,
**caractérisée en ce que** la poignée est constituée par une poignée coulissante (27), de sorte que en sa position inopérante, elle est disposée à l'intérieur du verrouillage (19), et en sa position opérante elle est disposée latéralement près du boîtier (11) de la friteuse (10).

3. Friteuse selon les revendications 1 et 2,
**caractérisée en ce que** la poignée coulissante (27) en sa position inopérante est logée dans un logement (24) du verrouillage (19) qui comporte des régions de guidage et de support (28) pour la poignée coulissante (27).

4. Friteuse selon la revendication 3,
**caractérisée en ce que** les régions de guidage et de support pour la poignée coulissante (24) comportent des éléments en forme de L disposés à distance l'un de l'autre dont une branche (28) agit en coopération chaque fois avec les régions de la poignée coulissante (27), et dont l'autre branche vient en saillie de la paroi interne (35) du verrouillage (19).

5. Friteuse selon une ou plusieurs revendications précédentes,
**caractérisée en ce** **que** la poignée coulissante (27) est formée d'une seule pièce qui comporte un corps (36) pratiquement plat dont les rebords latéraux (37) agissent en coopération avec les régions de guidage et de support (28) du verrouillage (19), et dont l'extrémité antérieure (29) fait saillie latéralement du logement (24) pour former une poignée.

6. Friteuse selon la revendication 5,
**caracterisée en ce qu'**une paroi de la poignée coulissante (27), de préférence la paroi supérieure de l'extrémité (29) qui dépasse du verrouillage (19) comporte une zone striée (30).

7. Friteuse selon une ou plusieurs des revendications précédentes,
**caractérisée en ce que** le corps (36) de la poignée coulissante (27) comporte en ses deux extrémités des cloisons de fermeture (38) disposées transversalement audit corps, et entre lesquelles s'étendent des nervures (40) formés dans la paroi interne du corps (36).

8. Friteuse selon la revendication 1,
**caractérisée en ce que** le verrouillage (19) est monté, pivotant sur le couvercle (18) et en ce que le logement (24) pour la poignée coulissante (27) est disposé latéralement à coté de l'axe de pivotement.

9. Friteuse selon les revendications 1 et 8,
**caractérisée en ce que** le verrouillage (19) réalisé d'une pièce comporte des joues paliers (23) pour l'axe de pivotement (21) dont les extrémités sont montées dans les parois latérales voisines du couvercle (18), et en ce que l'extrémité antérieure du verrouillage (19) présente un crochet de verrouillage (20) qui en sa position opérante vient en prise avec une butée (33) du boîtier (11) de la friteuse (10).

10. Friteuse selon la revendication 9,
**caractérisée en ce que** l'extrémité postérieure (39) opposée au crochet de verrouillage (20) est courbée en direction du boîtier (11) et pénètre dans une dépression (22) du couvercle (18).
